# EUROPÄISCHE PATENTSCHRIFT

(11) **EP 3 055 650 B1**
(45) Veröffentlichungstag und Bekanntmachung des Hinweises auf die Patenterteilung: **09.01.2019**
(21) Anmeldenummer: 14766114.4
(22) Anmeldetag: 13.09.2014
(51) Int. Cl.: G01C 21/36, G06K 9/00

(54) **VERFAHREN UND VORRICHTUNG ZUR AUGMENTIERTEN DARSTELLUNG**
METHOD AND DEVICE FOR AUGMENTED DISPLAY
PROCÉDÉ ET DISPOSITIF DE REPRÉSENTATION AUGMENTÉE

(30) Priorität: 01.10.2013 DE 102013016244
(43) Veröffentlichungstag der Anmeldung: 17.08.2016
(73) Patentinhaber: Daimler AG, 70327 Stuttgart (DE)
(72) Erfinder: GRÜNLER, Christian, 72108 Ergenzingen (DE); WILKE, Wilhelm, 89160 Dornstadt (DE); TROPPER, Tobias, 70794 Filderstadt (DE); SCHATTON, Adam, 73732 Esslingen (DE); HAMMORI, Markus, 71134 Deufringen (DE); LÜTZE, Lars, 73730 Esslingen (DE); NECKER, Marc C., 70565 Stuttgart (DE); OLSZEWSKI, Dirk, 33106 Paderborn (DE)
(74) Vertreter: JENSEN & SON
(86) Internationale Anmeldenummer: PCT/EP2014/002485
(87) Internationale Veröffentlichungsnummer: WO 2015/049029

(56) Entgegenhaltungen:
- US-A1- 2010 023 257
- US-A1- 2011 265 023
- US-A1- 2012 075 341
- US-A1- 2013 093 787

## Beschreibung

Die Erfindung betrifft ein Verfahren zur augmentierten Darstellung mindestens einer Zusatzinformation in mindestens einem Bild einer Fahrzeugumgebung. Des Weiteren betrifft die Erfindung eine Vorrichtung zur Durchführung des Verfahrens.

Vorrichtungen für eine augmentierte Darstellung bringen eine erzeugte Zusatzinformation in Überlagerung mit einer aufgenommenen und wahrnehmbaren Umgebung. Dabei werden die Zusatzinformationen lagerichtig in den Umgebungsbildern dargestellt, wobei die Umgebungsbilder im Hintergrund ausgegeben werden. Solche Vorrichtungen sind beispielsweise teildurchsichtige Anzeigeeinheiten, wie eine HUP-Anzeigeeinheit (HUP = Head-Up-Display), eine HMD-Anzeigeeinheit (HMD = Head Mounted Display), oder undurchsichtige Anzeigeeinheiten, zum Beispiel herkömmlicher Bildschirm.

Eine solche Vorrichtung zur augmentierten Darstellung ist beispielsweise aus der DE 10 2011 115 739 A1 bekannt.

Die US 2010/023257 offenbart ein Verfahren, bei dem einer Karte überlagert Informationen zur Entfernung zu verschiedenen, in der Karte nicht dargestellten Orten gruppiert ausgegeben werden.

Aus der US 2013/093787 A1 ist ein Verfahren bekannt, bei dem Zusatzinformation einem Bild einer Umgebung überlagert werden. Sich gegenseitig verdeckende Zusatzinformationen werden in einer Gruppe zusammengefasst. Die Zusatzinformationen sind den in dem Bild dargestellten Objekten zugehörig.

Die US 2012/075341 A1 offenbart ein Verfahren zur augmentierten Darstellung einer Zusatzinformation überlagert einem digitalen Bild, wobei mehrere darzustellende Zusatzinformatione, die einem in dem Bild dargestellten Objekte zugehörig sind, zu einer Gruppe zusammengefasst dargestellt werden.

Die US 2011/0265023 A1 offenbart ein Verfahren zur Darstellung einer Umgebung, wobei die Darstellung an eine Sicht einer Person angenährt ist, die sich entlang einer Straße bewegt. In der Darstellung sind Zusatzinformationen dargestellt, deren zugehörige reale Objekte in der Darstellung von der Person aktuell sichtbar sind. Mehrere Zusatzinformationen sind dabei in einem übergeordneten Ordner zusammengefasst, der durch eine Nutzereingabe geöffnet werden kann.

Der Erfindung liegt die Aufgabe zu Grunde, ein verbessertes Verfahren zur augmentierten Darstellung einer einem digitalen Bild (Bd) oder einem realen Bild (Br) einer Fahrzeugumgebung (U) überlagerten Zusatzinformation und eine verbesserte Vorrichtung zur augmentierten Darstellung von einer einem digitalen Bild (Bd) überlagerten Zusatzinformation einer Fahrzeugumgebung (U) anzugeben.

Hinsichtlich des Verfahrens wird die Aufgabe erfindungsgemäß gelöst durch die Merkmale des Anspruchs 1. Hinsichtlich der Vorrichtung wird die Aufgabe erfindungsgemäß gelöst durch die Merkmale des Anspruchs 7.

Vorteilhafte Ausgestaltungen der Erfindung sind Gegenstand der Unteransprüche.

Die Erfindung ermöglicht eine kontinuierliche Anpassung der Einblendung von virtuellen Zusatzinformationen. Insbesondere ist eine schnell erkennbare Zuordnung virtueller Zusatzinformationen zu realen Objekten in der realen Umgebung insbesondere bei dynamischen Szenen, wie Videosequenzen, die während einer Fahrt mit dem eigenen Fahrzeug aufgenommen und auf einer Anzeige ausgegeben werden, ermöglicht. Des Weiteren ermöglicht die Erfindung intuitive Interaktionen mit den gruppierten virtuellen Zusatzinformationen zur Erkennung des Inhalts aller oder nur relevanter oder ausgewählter Zusatzinformationen durch einen Betrachter.

Die Erfindung ist anwendbar im Fahrzeug zur Erfassung und Darstellung einer Fahrzeugumgebung. Darüber hinaus ist die Erfindung auch für in einem Fahrzeug verwendete mobile Geräte, wie einem Mobiltelefon, einer Datenbrille, und/oder für in einem Fahrzeug verwendete virtuelle Anzeigen, wie einem

Projektionsbildschirm oder für Anzeigen in Transportmitteln, wie Bus, Bahn, Flugzeug und Schiff, anwendbar. Dabei erfolgt eine Anpassung der überlagernden Zusatzinformationen hintergrundsabhängig und/oder ereignis- und/oder situationsabhängig.

In einer Weiterbildung werden mehrere darzustellende Zusatzinformationen derart als eine Gruppeninformation ausgegeben, dass die einzelnen Zusatzinformationen übereinander und einander teilweise oder vollständig verdeckend ausgegeben werden. Durch manuelle oder ereignisgesteuerte Anwahl eines unverdeckten Bereiches einer verdeckten Zusatzinformation kann diese im Vordergrund als erste Zusatzinformation ausgegeben werden. Beispielsweise können ereignisgesteuert bei Erreichen des zugehörigen realen Objektes und/oder entfernungsabhängig insbesondere Zusatzinformationen von nah entfernten realen Objekten und/oder abhängig von einer vorgegebenen Relevanz und/oder einer Priorität zuvor verdeckte Zusatzinformationen im Vordergrund ausgegeben werden. Somit ist eine Rang- oder Prioritätsfolge in der Darstellung mehrerer Zusatzinformationen möglich, wobei die Rang- oder Prioritätsfolge manuell oder ereignisgesteuert und/oder situationsbedingt vorgebbar ist.

Erfindungsgemäß werden zukünftig darzustellende Zusatzinformationen in einer ersten Gruppe zusammengefasst und als erste Gruppeninformation ausgegeben.

So werden beispielsweise in großer Entfernung zum Bezugspunkt, insbesondere zur momentanen Position des eigenen Fahrzeugs liegende Objekte in der ersten Gruppe zusammengefasst. Mit näher kommendem eigenen Fahrzeug werden dann diese gruppierten Zusatzinformationen insbesondere bei Erreichen deren realen Positionen durch das eigene Fahrzeug vollständig lesbar und zum Beispiel separat nebeneinander und/oder übereinander im Hintergrund ausgegeben.

Darüber hinaus ist vorgesehen, dass alternativ oder zusätzlich aktuell darzustellende Zusatzinformationen in einer zweiten Gruppe zusammengefasst und als zweite Gruppeninformation ausgegeben werden. Die aktuell darzustellenden virtuellen Zusatzinformationen werden zur Reduzierung der Informationsdichte in der Anzeige teilweise oder vollständig übereinander liegend in der Gruppeninformation zusammengefasst und ausgegeben.

Ferner ist es möglich, dass vorangegangene, beispielsweise in der Vergangenheit dargestellte virtuelle Zusatzinformationen in einer dritten Gruppe zusammengefasst und als dritte Gruppeninformation ausgegeben werden. Hierdurch kann der Betrachter bei Bedarf einen Rückblick auf die in der Vergangenheit dargestellten virtuellen Zusatzinformationen durch eine einfache Anwahl der dritten Gruppeninformation erhalten.

In einer Weiterbildung werden die Zusatzinformationen von mindestens einer der Gruppen sortiert nach deren Entfernungen zur Position eines Betrachters der Anzeige, insbesondere zur Position des eigenen Fahrzeugs, und/oder nach der zugehörigen Anzeigedauer im Hintergrund auf der Anzeige zusammengefasst und als betreffende Gruppeninformation ausgegeben. So können die einer Gruppe zugehörigen Zusatzinformationen nach der Entfernung zum Bezugspunkt, z. B. dem eigenen Fahrzeug, sortiert zusammengefasst und gegebenenfalls ausgegeben werden, so dass die Ausgabe der Zusatzinformationen zeitfolgerichtig erfolgt.

Die Erfindung ermöglicht darüber hinaus eine dynamische Interaktion mit der Anzeige, indem die im Hintergrund ausgegebene Zusatzinformation manuell mittels mindestens einer Auswahlfunktion manipuliert und deren Ausgabe im Hintergrund entsprechend verändert oder angepasst werden kann. Insbesondere können die Ausgabe und/oder die Manipulation der auszugebenden Zusatzinformation mittels einer sprach-, bild- und/oder tastengesteuerten Funktion erfolgen.

In einer möglichen Ausführungsform wird die Zusatzinformation als ein Zusatzobjekt und/oder ein Zusatztext ausgegeben, wobei zumindest eines der Zusatzobjekte als ein virtuelles Verkehrsschild mit oder ohne Bezug (Kontextbezug) zur dargestellten Umgebung erzeugt wird. Als Bezugspunkt dient insbesondere bei einer Anwendung der Erfindung in einer Anzeige eines Fahrzeugs die Momentanposition des eigenen Fahrzeugs.

Des Weiteren kann vorgesehen sein, dass die Zusatzinformation, insbesondere ereignisgesteuert und gegebenenfalls wechselweise, als 2D-Darstellung und/oder als 3D-Darstellung ausgegeben wird. So können beispielsweise eine als Zusatzobjekt ausgegebene Zusatzinformation, z. B. ein virtuelles Verkehrsschild, in 3D-Darstellung und/oder eine als Zusatztext ausgegebene Zusatzinformation, insbesondere eine Beschriftung eines realen oder virtuellen Objektes im Ausgabebild, in 2D-Darstellung im Hintergrund eingeblendet werden. Dies erhöht die Übersichtlichkeit der Anzeige und ermöglicht eine verbesserte Wahrnehmung und Erkennbarkeit von relevanten Informationen im Hintergrund.

Hinsichtlich der Vorrichtung zur Durchführung eines Verfahrens umfasst diese mindestens eine Aufnahmeeinheit zur Aufnahme und Erfassung eines Bildes einer Umgebung, das einen Hintergrund einer Anzeige bildet, mindestens eine Verarbeitungseinheit zur grafischen Verarbeitung eines aufgenommenen digitalen Bildes und Transformation des digitalen Bildes in ein Ausgabebild sowie zur Erzeugung und Überlagerung mindestens einer Zusatzinformation in den Hintergrund und mindestens eine Ausgabeeinheit zur Ausgabe der Zusatzinformation in den Hintergrund.

Bei der Aufnahmeeinheit handelt es sich insbesondere um eine oder mehrere Kameras, insbesondere ein Stereo-Kamerasystem, eine omnidirektionale Kamera, eine Infrarot-Kamera, eine Laser-Scan-Einheit, ein Radar, ein Lidar oder eine Kombination von vergleichbaren Erfassungseinheiten. Die Verarbeitungseinheit kann in der Aufnahmeeinheit integriert oder separat ausgebildet sein. Die Verarbeitungseinheit kann eine integrierte Schaltung oder ein Steuergerät oder eine andere geeignete Bildverarbeitungseinheit sein. Die Ausgabeeinheit kann ein klassischer Bildschirm, eine HUP-Anzeigeeinheit (HUP = Head-Up-Display), eine HMD-Anzeigeeinheit (HMD = Head Mounted Display) oder eine andere geeignete Anzeigeeinheit sein.

Bei einem weiteren erfindungsgemäßen Verfahren zur augmentierten Darstellung mindestens einer Zusatzinformation in mindestens einem aufgenommenen digitalen Bild einer Umgebung eines Fahrzeugs werden ereignisgesteuert:
- die aufgenommenen digitalen Bilder;
- ein zugehöriger Erfassungszeitpunkt und
- zumindest als Fahrzeugparameter eine zugehörige momentane Position des Fahrzeugs
gespeichert, wobei die Speicherung der digitalen Bilder in Abhängigkeit vom ermittelten Ereignis und den aufgenommenen digitalen Bildern örtlich und/oder zeitlich begrenzt erfolgt und/oder wobei die gespeicherten digitalen Bilder zumindest eines Ereignisses als Ausgabebild auf einer Anzeige ausgegeben werden.

Die mit der Erfindung erzielten Vorteile bestehen insbesondere darin, dass eine intuitive Wahrnehmung der Beziehung zwischen realer Umgebung und virtuellen Zusatzinformationen und insbesondere eine bessere Übersichtlichkeit aufgrund der Zusammenfassung von mehreren darzustellenden virtuellen Zusatzinformationen in Gruppeninformationen ermöglicht sind. Zudem ist eine zeitfolgerichtige und somit chronologische Darstellung von virtuellen Zusatzinformationen in der Anzeige ermöglicht. Ferner kann die Anzeige ereignis- und/oder situationsbedingt angepasst und Zusatzinformationen zu einem bestimmten Ereignis separat ausgegeben werden.

Bei Anwendung des Verfahrens zur augmentierten Darstellung in einem Fahrzeug korrespondieren die virtuellen Zusatzinformationen direkt mit dem für den Fahrer sichtbaren Umfeld der Fahrzeugumgebung, wobei die erfindungsgemäße "reduzierte" augmentierte Darstellung der Zusatzinformationen, wie Zusatzobjekte/Zusatztexte, durch Zusammenfassung mehrerer Zusatzinformationen in sortierten Gruppen erfolgt. Dabei können darzustellende/dargestellte Zusatzinformationen in folgende Gruppen zusammengefasst werden:
- Vorschau-Gruppe (= erste Gruppe): Zusatzinformationen, deren Anzeige kurz bevorsteht;
- Aktuelle Gruppe (= zweite Gruppe): momentan in der Fahrzeugumgebung sichtbare Zusatzinformationen;
- Rückblick-Gruppe (= dritte Gruppe): Zusatzinformationen, die kürzlich in der Anzeige sichtbar waren.

Folgende Sortierungen innerhalb einer Gruppe sind möglich:
- Sortierung der Zusatzinformationen nach der Entfernung vom Bezugspunkt, dem Fahrzeug;
- Sortierung nach der Verweildauer der Zusatzinformationen in der Anzeige.

Zur zeitlichen und inhaltlichen Interaktion und Manipulation der Ausgabe/Abbildung der Zusatzinformationen im Ausgabebild der Umgebung werden dem Insassen verschiedene Funktionen, wie "Anhalten einer momentan ausgegebenen Folge von Zusatzinformationen und/oder Ausgabebildern" (= Anhalten der betreffenden Videosequenz), "Zurückspulen", "Gruppen/-Zusatzinformation" und "Innenansicht" angeboten.

Ausführungsbeispiele der Erfindung werden im Folgenden anhand von Zeichnungen näher erläutert.

Dabei zeigen:
- Fig. 1A: schematisch eine Vorrichtung zur augmentierten Darstellung einer Zusatzinformation in einem Hintergrund,
- Fig. 1B: schematisch ein Fahrzeug mit mehreren Aufnahmeeinheiten,
- Fig. 2: schematisch ein Ausführungsbeispiel für einen Hintergrund mit überlagerten 2D-Zusatzinformationen, die in Bezug oder ohne Bezug zu Bildobjekten im Hintergrund positioniert sind,
- Fig. 3: schematisch ein weiteres Ausführungsbeispiel für einen Hintergrund mit überlagerten 2D-Zusatzinformationen, die in Bezug oder ohne Bezug zu Bildobjekten im Hintergrund positioniert sind, wobei zumindest zwei ausgegebene Zusatzinformationen in Bezug zueinander stehen,
- Fig. 4: schematisch ein weiteres Ausführungsbeispiel für einen Hintergrund mit gruppierten Zusatzinformationen,
- Fig. 5: schematisch ein weiteres Ausführungsbeispiel für einen Hintergrund mit gruppierten und zeitfolgerichtig ausgegebenen Zusatzinformationen,
- Fig. 6: schematisch ein weiteres Ausführungsbeispiel für einen Hintergrund mit überlagerten 2D- und 3D-Zusatzinformationen mit interaktiven Schaltflächen in der Anzeige zur Ausgabe weiterer Zusatzinformationen mit Bezug zu einer der angewählten Zusatzinformationen,
- Fig. 7: schematisch ein weiteres Ausführungsbeispiel für einen Hintergrund mit überlagerten 2D- und 3D-Zusatzinformationen mit interaktiven Schaltflächen in der Anzeige zur Ausgabe weiterer Zusatzinformationen mit Bezug zu einer der angewählten Zusatzinformationen, und
- Fig. 8: schematisch ein weiteres Ausführungsbeispiel für ein ein Ereignis darstellendes Ausgabebild mit überlagerten 2D- und 3D-Zusatzinformationen.

Einander entsprechende Teile sind in allen Figuren mit den gleichen Bezugszeichen versehen.

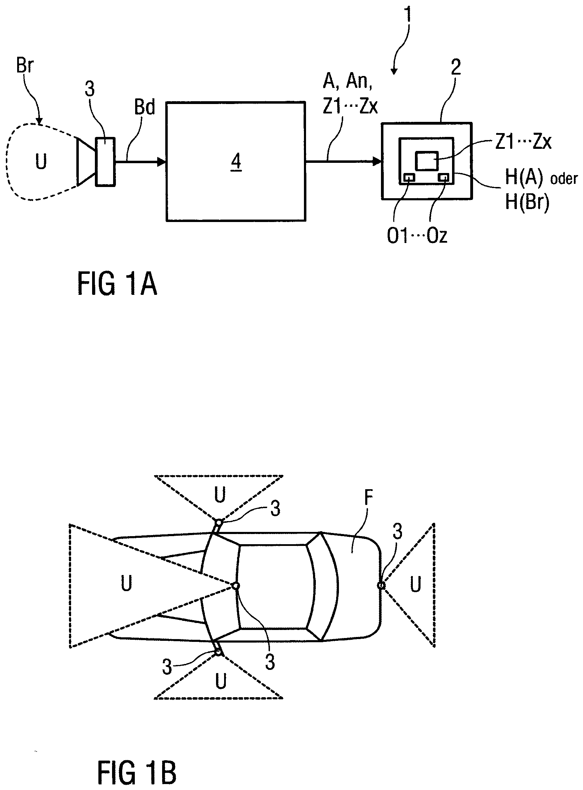

Figur 1A zeigt schematisch eine Vorrichtung 1 zur augmentierten Darstellung mindestens einer, insbesondere virtuellen Zusatzinformation Z1 bis Zx in einem Bild , das einen Hintergrund H(A), H(Br) auf einer Ausgabeeinheit 2.

Das Bild kann dabei ein reales Bild Br einer im Sichtfeld des Benutzers liegenden Umgebung U sein oder ein digital aufgenommenes Bild Bd der vorausliegenden Umgebung U.

Mit anderen Worten: Das den Hintergrund H(Br) bildende Bild Br ist in einer Ausführungsform die reale vorausliegende Umgebung U. In einer alternativen Ausführungsform, welche hier näher beschrieben wird, wird als Bild ein digitales Bild Bd der realen vorausliegenden Umgebung U aufgenommen und in ein Ausgabebild A transformiert, das den Hintergrund H(A) auf der Ausgabeeinheit 2 bildet.

Die Vorrichtung 1 umfasst eine Aufnahmeeinheit 3, welche fortlaufend digitale Bilder Bd der Umgebung U in Art einer Videosequenz aufnimmt. Die digitalen Bilder Bd werden einer Verarbeitungseinheit 4 zur Verarbeitung und Erzeugung eines daraus resultierenden Ausgabebildes A bzw. einer Sequenz von Ausgabebildern An zugeführt. Das erzeugte und ausgegebene Ausgabebild A bildet in dieser Ausführungsform den Hintergrund H(A). Zusätzlich erzeugt die Verarbeitungseinheit 4 virtuelle Zusatzinformationen Z1 bis Zx, die im Hintergrund H(A) oder H(Br) überlagert eingeblendet werden.

Die Vorrichtung 1 ist beispielsweise in einem in Figur 1B dargestellten Fahrzeug F integriert und dient dort der Erfassung der Umgebung U des Fahrzeugs F, insbesondere der Erfassung einer in Fahrtrichtung vorausliegenden Fahrzeugumgebung. Das Fahrzeug F umfasst beispielsweise als Aufnahmeeinheit 3 mindestens eine fahrzeugeigene Kamera (oder eine Radareinheit, eine Ultraschallsensoreinheit, eine Lidareinheit), welche zumindest im Frontbereich angeordnet ist. Zusätzlich kann das Fahrzeug F, wie in Figur 1B dargestellt, weitere Aufnahmeeinheiten 3, z. B. integriert in Seitenspiegel und/oder im Heckbereich des Fahrzeugs F, umfassen.

Die Aufnahmeeinheit 3 ist dabei derart ausgeführt, dass diese zwei- oder mehrdimensionale digitale Bilder Bd mit oder ohne Tiefeninformation der Umgebung U aufnimmt.

Die Verarbeitungseinheit 4 ist insbesondere ein separates Steuergerät und/oder eine Bildverarbeitungseinheit, die in einem anderen Steuergerät und/oder Fahrassistenzsystem integriert sein kann.

Die Ausgabeeinheit 2 ist insbesondere eine Anzeige in Form eines Bildschirms im Armaturenbereich und/oder eines Projektionsbildschirms im Frontscheibenbereich. Bei Ausbildung der Ausgabeeinheit 2 als Bildschirm wird im Hintergrund H(A) das erzeugte digitale Ausgabebild A ausgegeben, in welchem die virtuellen Zusatzinformationen Z1 bis Zx eingeblendet werden. Bei Ausbildung der Ausgabeeinheit 2 als Projektionsbildschirm oder Head-up-Display bildet die reale vorausliegende Umgebung U den Hintergrund H(Br), auf welchem die virtuellen Zusatzinformationen Z1 bis Zx eingeblendet werden. Die Ausgabeeinheit 2 wird nachfolgend Anzeige 2 genannt.

Die Vorrichtung 1, insbesondere die Verarbeitungseinheit 4 ist derart ausgebildet, dass das aufgenommene digitale Bild Bd der Umgebung U in ein Ausgabebild A der Anzeige 2 als Hintergrund H(A) transformiert wird, wobei die Zusatzinformation Z1 bis Zx in Abhängigkeit von dem zugehörigen Hintergrundbereich des Ausgabebildes A und somit verändert/angepasst in diesem überlagert ausgegeben werden kann.

Das heißt, durch einfache Anpassung oder Veränderung der virtuellen einzublendenden Zusatzinformation Z1 bis Zx kann diese optisch hervorgehoben im Ausgabebild A und somit vor dem Hintergrund H(A) erscheinen.

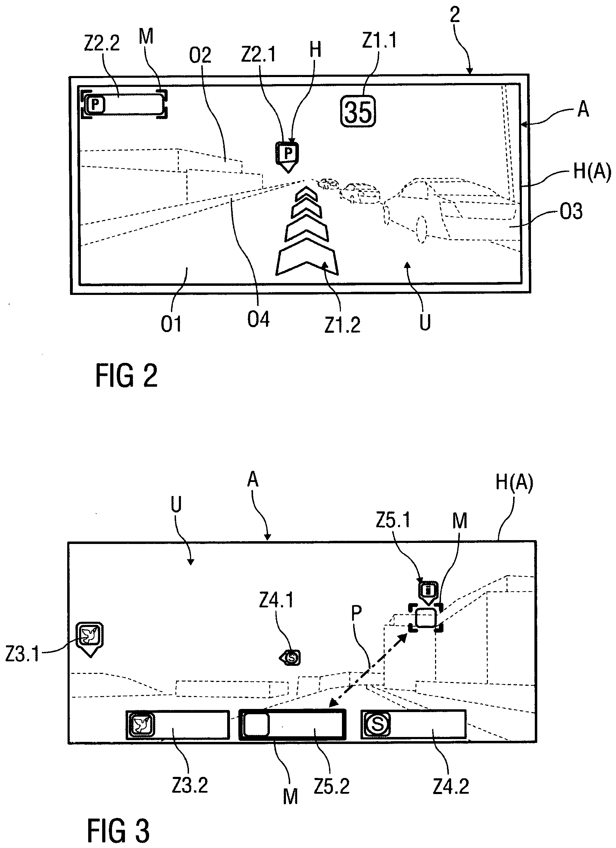

Figur 2 zeigt ein mögliches Ausführungsbeispiel, bei welchem anhand des beispielsweise als Farbbild aufgenommenen digitalen Bildes Bd einer Umgebung U ein Ausgabebild A als Hintergrundbild auf der Anzeige 2 erzeugt und ausgegeben wird. Das den Hintergrund H(A) bildende Ausgabebild A und dessen reale Objekte O1 bis Oz sind durch eine dünne Punktliniendarstellung in Figur 2 gezeigt.

Das Ausgabebild A zeigt hierbei eine dem eigenen Fahrzeug F vorausliegende Umgebung U. Das erfasste digitale Bild Bd dieser Umgebung U wurde beispielsweise als ein 24-bit dreikanaliges (RGB - Rot-Grün-Blau) Farbbild mit je Bildpixel einem RGB-Wert oder als ein Infrarot-Bild in einem für den Menschen nicht wahrnehmbaren Wellenbereich aufgenommen.

Zur Unterstützung des Betrachters, insbesondere eines Fahrers oder Beifahrers, können zu gewünschten oder relevanten Objekten O1 bis Oz zusätzliche Informationen als virtuelle Zusatzinformationen Z1 bis Zx eingeblendet werden, welche relativ zu dem jeweils zugehörigen realen Objekt O1 bis Oz positionsgenau und perspektivisch korrekt, nur positionsgenau, richtungsanalog und/oder unabhängig und somit frei vom Hintergrund H(A) (dem Ausgabebild A oder der durchscheinenden Umgebung U (= H(Br)) im Ausgabebild A eingeblendet werden.

Mit anderen Worten: Das digitale Ausgabebild A, repräsentierend die umgebende Realität, wird mit zusätzlichen digitalen Informationen - den virtuellen Zusatzinformationen Z1 bis Zx - überlagert, wobei die Überlagerung im Ausgabebild A perspektivisch korrekt zu den realen Objekten O1 bis Oz erfolgt. Dadurch korrespondieren die virtuellen Zusatzinformationen Z1 bis Zx direkt mit den realen Objekten O1 bis Oz in der realen Umgebung U.

Im beschriebenen Ausführungsbeispiel bei einer Anwendung im Fahrzeug F bewegt sich das Ausgabebild A der Umgebung U mit der Fahrt des eigenen Fahrzeugs F mit. Hierzu wird eine Abfolge von Ausgabebildern A in Art einer Videosequenz der in der Umgebung U aufgenommenen digitalen Bilder Bd erzeugt. Aufgrund der Korrespondenz von virtuellen Zusatzinformationen Z1 bis Zx und zu einem oder mehreren realen Objekten O1 bis Oz in der Umgebung U kann in einer Weiterbildung die Lage und/oder Form der virtuellen Zusatzinformation Z1 bis Zx kontinuierlich angepasst werden.

Beispielsweise repräsentieren die Zusatzinformationen Z1.1 und Z1.2 das Objekt O1 und die vorausliegende Straße, auf welcher das eigene Fahrzeug F fährt. Die 2D-Zusatzinformation Z1.1 ist ein Informationstext, welcher eine Hausnummer repräsentiert. Das reale Objekt O2 ist ein Parkhaus. Die zugehörige Zusatzinformation Z2.1 repräsentiert den korrekten Ort in der Umgebung U. Hierzu umfasst die Zusatzinformation Z2.1 zumindest einen Richtungshinweis H in Form eines Pfeiles, der anzeigt, wo das Parkhaus in der realen Umgebung U liegt. Die zugehörige textuelle Zusatzinformation Z2.2 gibt beispielsweise die Adresse an. Das Objekt O3 repräsentiert parkende Autos und das Objekt O4 eine Fahrbahnbegrenzung.

Die 3D-Zusatzinformation Z1.2 ist als insbesondere sich verändernder Richtungspfeil ausgegeben, welcher die Fahrtrichtung des eigenen Fahrzeugs F auf dem zugehörigen identifizierten Objekt O1, der Straße, angibt.

Zu dem Objekt O2 - dem Parkhaus - werden korrespondierend zwei Zusatzinformationen Z2.1 und Z2.2 erzeugt und im Ausgabebild A ausgegeben. Das Objekt 2 in der Realität wird somit mit zwei virtuellen Zusatzinformationen Z2.1, Z2.2 augmentiert.

Eine der Zusatzinformationen Z2.1, insbesondere ein Zusatzobjekt in Form eines Parkhaussymbols, wird an der Stelle im Ausgabebild A platziert, an welcher sich das reale Objekt O2 im Ausgabebild A befindet. Die Größe dieser virtuellen Zusatzinformation Z2.1 ist proportional zu der Entfernung des realen Objektes O2, so dass sich seine Größe bei fahrendem Fahrzeug F fortlaufend ändert. Das reale Objekt O2 - das Parkhaus - wird perspektivisch korrekt angezeigt.

Eine weitere virtuelle Zusatzinformation Z2.2 in Form eines Zusatztextes enthält eine Beschreibung des realen Objektes O2. Diese Zusatzinformation Z2.2 wird ohne Ortsbezug zum Objekt O2 und somit frei in einem Bildbereich des Ausgabebildes A ausgegeben. Darüber hinaus wird diese Zusatzinformation Z2.2 und seine Position nicht fortlaufend angepasst, sondern weist eine konstante Form, Abmessung und/oder Position im Ausgabebild A auf. Dadurch ist der darin enthaltene Text gut lesbar.

Darüber hinaus werden im Ausgabebild A nach Figur 2 weitere Zusatzinformationen Z1 und Z3, welche im Bezug zum eigenen Fahrzeug F und/oder zum Objekt O1 stehen, entsprechend positioniert.

Dabei repräsentiert die virtuelle Zusatzinformation Z1.1 als Zusatztext eine Hausnummer entlang der Straße. Diese Zusatzinformation Z1.1 kann in einem dedizierten Bildbereich des Ausgabebildes A mit einer festen Position ausgegeben werden, wobei der Wert fortlaufend an die momentane Fahrzeugposition angepasst werden kann. Die weitere virtuelle Zusatzinformation Z1.2, die in Bezug zum eigenen Fahrzeug F und zum Objekt O1, der Straße, steht, ist als Zusatzobjekt ausgebildet und repräsentiert die voraussichtlich zufahrende Fahrstrecke (Geradeausfahrt) des eigenen Fahrzeugs F auf dem Objekt O1. Diese virtuelle Zusatzinformation Z1.2 wird fortlaufend zumindest in Form, Größe und gegebenenfalls auch in Farbe an ein ermitteltes vorausliegendes Fahrziel und/oder Ereignis und/oder an die vorausliegende Fahrstrecke angepasst.

In Figur 2 sind als weitere Objekte O3 und O4 beispielsweise eine Fahrbahnbegrenzung (= Objekt O4) und seitlich parkende Fahrzeuge (= Objekt O3) dargestellt. Diese können ebenfalls mit zugeordneten virtuellen Zusatzinformationen Zx verknüpft werden.

Wie in Figur 2 gezeigt, werden mehrere Zusatzinformationen Z1 bis Zx in der Umgebung U des Ausgabebildes A gleichzeitig augmentiert dargestellt. Dabei können einige der Zusatzinformationen Z1 bis Zx (zum Beispiel Z2.1 in Figur 2) perspektivisch korrekt und somit mit Ortsbezug zum betreffenden realen Objekt O1 bis Oz und andere (zum Beispiel Z2.2 in Figur 2) ohne Bezug zur Realität an einer freien Position im Ausgabebild A ausgegeben werden.

Zusätzlich können die frei positionierten Zusatzinformationen Z1 bis Zx, die mit einem der Objekte O1 bis Oz in einem anderen Bezug, z. B. informativ und somit beschreibend oder zeitlich, stehen, mittels einer anderen Art der Darstellung den Bezug oder die Relation beschreibend ausgegeben werden. So wird beispielsweise die frei oder depositionierte Zusatzinformation Z2.2 des Objekts O2 mit einer Markierung M, z. B. einem Teilrahmen, versehen. Die Markierung M erfolgt dabei in einer anderen Farbe und/oder in einem anderen Farbraum als die Ausgabe der Zusatzinformation Z2.2, so dass diese sich farblich voneinander abheben. Dabei kann die Ausgabe der Markierung M derart gesteuert werden, dass nur bei Anwahl des zugeordneten Objektes O2 die Markierung M ausgegeben und somit die betreffende Zusatzinformation Z2.2 im Ausgabebild A mittels der zusätzlich eingeblendeten Markierung M hervorgehoben wird.
Werden mehrere Zusatzinformationen Z1 bis Zx in dem Ausgabebild A gleichzeitig augmentiert, kann beispielsweise nur ein reales Objekt O2 und dessen zugehörige/n Zusatzinformationen Z2.1 bis Z2.2 selektiert werden und dementsprechend deren zugehörige Markierungen M ausgegeben werden.

Figur 3 zeigt ein weiteres Ausführungsbeispiel für ein Ausgabebild A mit mehreren augmentierten Zusatzinformationen Z3.1 bis Z5.2, wobei die als Zusatzobjekt, insbesondere Symbol, ausgegebenen Zusatzinformationen Z3.1, Z4.1 und Z5.1 im Ausgabebild A perspektivisch korrekt und mit Ortsbezug zu einem zugehörigen und nicht im Ausgabebild A erkennbaren Objekt in der Umgebung U ausgegeben werden. Jeder dieser Zusatzinformation Z3.1 bis Z5.1 und somit jedem betreffenden und nicht im Ausgabebild A erkennbaren Objekt ist eine weitere Zusatzinformation Z3.2 bis Z5.2 zugeordnet, die ohne Ortsbezug frei im Raum des Ausgabebildes A, bevorzugt im freien Randbereich des Ausgabebildes A der besseren Übersichtlichkeit ausgegeben wird.

In einer Weiterbildung ist vorgesehen, dass bei Anwahl und Selektion eines der realen und nicht im Ausgabebild A erkennbaren Objekte dessen zugehörige Zusatzinformationen Z3.1, Z3.2 oder Z4.1, Z4.2 oder Z5.1, Z5.2 mit Markierungen M versehen werden.

Im Ausführungsbeispiel nach Figur 3 wurde das den Zusatzinformationen Z5.1 und Z5.2 zugeordnete reale Objekt O1 bis Oz selektiert, so dass die in Beziehung zueinander stehenden Zusatzinformationen Z5.1 bis Z5.2 mittels einer rahmenförmigen Markierung M hervorgehoben ausgegeben werden. Die Beziehung der Zusatzinformation Z5.1 bis Z5.2 ist in Figur 3 mittels eines Pfeils P angedeutet, der nicht im Ausgabebild A ausgegeben wird. Dabei können die Markierungen M der selektierten Zusatzinformationen Z5.1 bis Z5.2 in Form, Farbe und/oder Größe gleich oder verschieden ausgegeben werden.

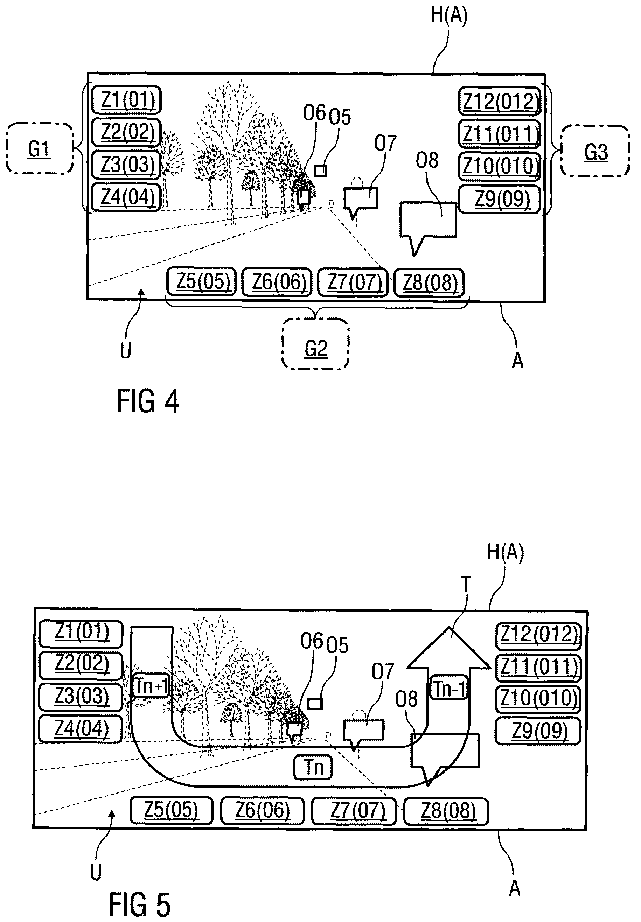

Figuren 4 und 5 zeigen schematisch weitere Ausführungsbeispiele für ein Ausgabebild A mit gruppierten und zeitfolgerichtig ausgegebenen Zusatzinformationen Z1 bis Z12.

Dabei werden diese virtuellen Zusatzinformationen Z1 bis Z12 ohne Ortsbezug zur momentanen Realität und Umgebung U im Ausgabebild A ausgegeben, obwohl diese einen Objektbezug zu zumindest einem realen Objekt O1 bis O12 in der Umgebung U aufweisen.

Für eine verbesserte Übersichtlichkeit der Anzeige 2 ist daher vorgesehen, diese objektbezogenen Zusatzinformationen Z1(O1) bis Z12(O12) zu gruppieren und zusammengefasst auszugeben.

Beispielsweise werden hierzu die Zusatzinformationen Z1 bis Z9 mittels der Verarbeitungseinheit 4 zu folgenden Gruppen G1 bis G3 zusammengefasst und gruppiert ausgegeben:
- erste Gruppe G1 = Vorschau-Gruppe: Zusammenfassung und Ausgabe von Zusatzinformationen Z1 bis Z4, deren zugehörige reale Objekte O1 bis O4 in der Umgebung U vorausliegen und somit in Zukunft angezeigt werden (das heißt: deren Anzeige kurz bevorsteht); dabei erfolgt die Ausgabe dieser Zusatzinformationen Z1 bis Z4 der ersten Gruppe G1 in einem ersten Randbereich des Ausgabebildes A, wobei die Zusatzinformationen Z1 bis Z4 nebeneinander (wie dargestellt) oder übereinander teilweise oder vollständig verdeckend als eine Gruppeninformation (nicht dargestellt) ausgegeben werden können;
- zweite Gruppe G2 = Anzeige-Gruppe: Zusammenfassung und Ausgabe von Zusatzinformationen Z5 bis Z8, deren zugehörige reale Objekte O5 bis O8 in der unmittelbaren Umgebung U des Fahrzeugs F liegen und somit momentan im Ausgabebild A angezeigt werden (das heißt: die Objekte sind sichtbar); dabei erfolgt die Ausgabe dieser Zusatzinformationen Z5 bis Z8 der zweiten Gruppe G2 in einem zweiten Randbereich des Ausgabebildes A, wobei die Zusatzinformationen Z5 bis Z8 nebeneinander (wie dargestellt) oder übereinander teilweise oder vollständig verdeckend als eine Gruppeninformation (nicht dargestellt) ausgegeben werden können;
- dritte Gruppe G3 = Rückblick-Gruppe: Zusammenfassung und Ausgabe von Zusatzinformationen Z9 bis Z12, deren zugehörige reale Objekte O9 bis O12 in der realen Umgebung U zurückliegen und somit in der Vergangenheit angezeigt wurden (das heißt: die kürzlich sichtbar waren); dabei erfolgt die Ausgabe dieser Zusatzinformationen Z9 bis Z12 der dritten Gruppe G3 in einem dritten Randbereich des Ausgabebildes A, wobei die Zusatzinformationen Z9 bis Z12 nebeneinander (wie dargestellt) oder übereinander teilweise oder vollständig verdeckend als eine Gruppeninformation (nicht dargestellt) ausgegeben werden können.

Darüber hinaus können die Zusatzinformationen Z1 bis Z12 innerhalb der jeweiligen Gruppe G1 bis G3 sortiert werden. Der Sortieralgorithmus kann konfiguriert werden. Folgende Optionen sind möglich: Sortierung der Zusatzinformationen Z1 bis Z12 nach der Entfernung vom Fahrzeug F und/oder nach deren Verweildauer im Ausgabebild A.

In der ersten Gruppe G1 "Vorschau-Gruppe" können die Zusatzinformationen Z1 bis Z4 darüber hinaus nach der Sortierung so angeordnet werden, dass die Zusatzinformation Z1 des am weitesten entfernten realen Objekts O1 bis Oz, welche somit demnächst zur Anzeige gebracht wird, oben angeordnet wird.

In der dritten Gruppe G3 "Rückblick-Gruppe" werden die Zusatzinformationen Z9 bis Z12 beispielsweise nach der Sortierung so angeordnet, dass die Zusatzinformation Z12 des am weitesten entfernten Objektes O1 bis Oz, welche bereits angezeigt wurde, aber nicht mehr sichtbar ist, oben angeordnet wird.

Die aktuell sichtbaren Zusatzinformationen Z5 bis Z8 werden nach der Sortierung beispielsweise von links nach rechts angeordnet.

Die Zusatzinformation Z5 des am weitesten entfernten Objekts O5 wird in der zweiten Gruppe G2 links platziert. Die Zusatzinformation Z8 des Objektes O8 mit der kleinsten Entfernung zum Fahrzeug F wird in der zweiten Gruppe G2 rechts angeordnet.

Durch diese Anordnung wird der chronologische und somit der zeitfolgerichtige Ablauf T der Anzeige 2 der zugehörigen Objekte O1 bis O12 der permanent dargestellten Zusatzinformationen Z1 bis Z12 illustriert, wie in Figur 5 anhand des Pfeils P für den Ablauf T verdeutlicht.

Wie oben bereits beschrieben, kann ein reales Objekt O2 bis O5 durch zwei virtuelle Zusatzinformationen Z2.1, Z2.2 bis Z5.1, Z5.2 veranschaulicht werden. Die virtuellen Zusatzinformation Zx.1, die perspektivisch korrekt im Ausgabebild A platziert werden, erlauben keine geordnete Ausgabe. Dagegen die virtuellen Zusatzinformation Zx.2 ohne Analogie zur Realität und Ortsbezug ermöglichen eine geordnete Platzierung im Ausgabebild A. Durch die Gruppierung von Zusatzinformation Zx.2 ohne Ortsbezug und die Sortierung der Zusatzinformation Zx.2 in den Gruppen G1 bis G3 ist es möglich, mit einfachen Befehlen gezielt eine bestimmte Zusatzinformation Zx.2 anzuwählen und auszugeben.

Zumindest eine dieser Zusatzinformationen Zx.2 oder Z1 bis Z12 kann mit einfachen Befehlen wie "rechts", "links", "oben" und "unten" in einer Gruppe G1 bis G3 selektiert werden. Für eine selektierte Zusatzinformation Zx.1 oder Z1 bis Z12 können weitere Befehle ausgeführt werden, z. B. kann eine weitere Zusatzinformation Z aufgerufen und ausgegeben werden.

Durch die gruppierte Anordnung der Zusatzinformationen Z1 bis Z12 kann die Interaktion mit diesen durch eine reduzierte Anzahl von Befehlen realisiert werden. Aufgrund der reduzierten Anzahl der Befehle kann die Interaktion mit den Zusatzinformationen Z1 bis Z12 mit einer Gestensteuerung oder Sprachbedienung realisiert werden.

Mittels einer Funktion "Anhalten" der Verarbeitungseinheit 4 kann beispielsweise das augmentierte Ausgabebild A der Realität und somit die Wiedergabe der Umgebung U (= Hintergrund H(A)) angehalten werden. Die Zusatzinformationen Z1 bis Z12 werden weiterhin ausgegeben, so dass eine Interaktion mit den virtuellen Zusatzinformationen Z1 bis Z12 möglich ist. Mit dieser Funktion kann die dargestellte Umgebung U unabhängig von der Fahrzeugbewegung im Ausgabebild A erkundet werden.

Mit einer weiteren aktiven Funktion "Zurückspulen" der Verarbeitungseinheit 4 wird das augmentierte Blickfeld und somit das Ausgabebild A entlang der bereits gefahrenen Route zurückgesetzt. Das Ausgabebild A der realen Umgebung U wird hierfür kontinuierlich gespeichert und mit den Fahrzeugpositionsdaten eines Navigationssystems gekoppelt. Nachdem das Blickfeld auf eine bereits befahrene Position zurückgesetzt wurde, wird das entsprechende Ausgabebild A der realen Umgebung U mit den zurückliegend ausgegebenen, zugehörigen virtuellen Zusatzinformationen Z9 bis Z12 augmentiert.

Darüber hinaus ist vorgesehen, dass jede Zusatzinformation Z1 bis Zx eine weitere Zusatzinformation bereitstellen, insbesondere aufrufen und ausgeben kann.

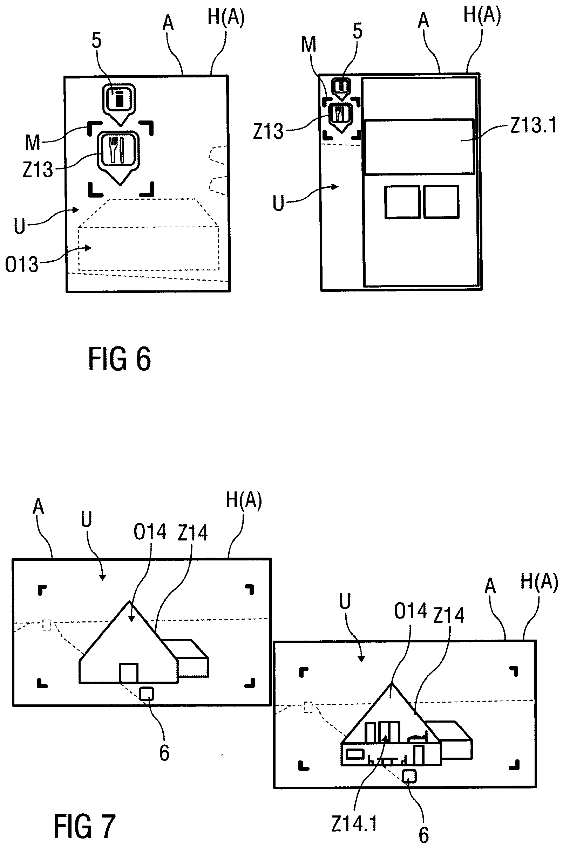

Figur 6 zeigt ein Ausführungsbeispiel, wobei eine Zusatzinformation Z13 um eine Schaltfläche 5 im Ausgabebild A erweitert ist, welche darauf hinweist, dass für diese Zusatzinformation Z13 eine weitere Zusatzinformation Z13.1 zu dem zugehörigen Objekt O13 gespeichert ist. Durch die Aktivierung der Schaltfläche 5 mittels einer Sprach-, Bediensteuerung oder automatisch bei Eintreten eines vorgegebenen Ereignisses wird die weitere Zusatzinformation Z13.3 im Ausgabebild A überlagernd eingeblendet. Die Aktivierung der Schaltfläche 5 kann dabei durch eine rahmenförmige Markierung M der zugehörigen Zusatzinformation Z13 angezeigt werden.

Figur 7 zeigt eine weitere Ausführungsform der Erfindung, bei welcher für eine virtuelle Zusatzinformation Z14, z. B. Abbild eines realen Objektes O14, z. B. eines Gebäudes in der Umgebung U; eine Innenansicht als weitere Zusatzinformation Z14.1 überlagernd eingeblendet wird. Wird das zugehörige Objekt O14 und/oder dessen zugehörige virtuelle allgemeine Zusatzinformation Z14, für welches beispielsweise eine Innenansicht gespeichert ist, selektiert, so wird die Darstellung dieses Objektes O14 bzw. dieser Zusatzinformation Z14 um eine Schaltfläche 6 erweitert, welche darauf hinweist, dass für dieses Objekt O14 eine Innenansicht (weitere Zusatzinformation Z14.1) angezeigt werden kann. Durch die Aktivierung dieser Schaltfläche 6 wechselt die Augmentierung des Objektes O14 von der die Außenansicht repräsentierenden Zusatzinformation Z14 in die die Innenansicht repräsentierende weitere Zusatzinformation Z14.1. Die virtuelle Innenansicht wird perspektivisch korrekt dargestellt und überlagert somit das reale Objekt O14.

Die Einsicht in das Objektinnere kann beispielsweise mit einem sogenannten "Clipping Plane"-Verfahren bestimmt werden. Diese Ebene verläuft über das virtuelle Objekt. Alle Punkte des virtuellen Modelles, die sich zwischen dem Fahrzeug F und der "Clipping Plane" Ebene befinden, werden nicht angezeigt. Die "Clipping Plane" richtet sich stets in Richtung des Fahrzeugs F aus, so dass bei fahrendem Fahrzeug F die Innenansicht kontinuierlich angepasst wird.

Wenn die Schaltfläche 6 für die Innenansicht erneut betätigt wird, wird das Ausgabebild A und die eingeblendete weitere Zusatzinformation Z14.1 angehalten, damit eine genauere Betrachtung möglich ist. Dabei kann die Innenansicht vergrößert werden. Teile des Modells können weitere Zusatzinformationen enthalten. Objekte Oz mit weiteren Zusatzinformationen Zx.1 werden in dem Standbild um eine Schaltfläche 5, 6 erweitert, bei deren Betätigung die weiteren Zusatzinformationen Zx angezeigt werden.

Gemäß einer Weiterbildung der Erfindung kann es bei einer Fahrt mit dem Fahrzeug F vorkommen, dass der Fahrer an einem Verkehrsschild vorbeifährt und dieses nicht richtig wahrnimmt. In dieser Situation ist es für den Fahrer hilfreich, wenn er die Möglichkeit hat, sich das Verkehrsschild auf der Anzeige 2 des Fahrzeuges F erneut anzeigen zu lassen.

Ebenso kann es vorkommen, dass ein im Fahrzeug F integrierter Geschwindigkeitslimitassistent eine Geschwindigkeitsbegrenzung erkennt, welche der Fahrer nicht wahrgenommen hat. Auch in diesem Fall ist es für den Fahrer hilfreich, wenn das Fahrzeug F das Verkehrsschild, das es erkannt hat, dem Fahrer in einem Foto oder Video der gesamten Szene erneut anzeigt. So kann der Fahrer selbst entscheiden, ob das Verkehrszeichen für ihn relevant ist.

Darüber hinaus kann es bei einem Geschwindigkeitslimitassistenten, welcher autonom Entscheidungen zum Betrieb des Fahrzeugs F vornimmt, zu Fehlerfassungen und - steuerungen kommen, weil beispielsweise eine Geschwindigkeitsbegrenzung fehlinterpretiert wurde, z.B. wenn es nicht für die eigene Fahrspur, sondern für eine Abbiegespur relevant ist. Wenn die fehlerfasste Geschwindigkeitsbegrenzung dem Fahrer in der Anzeige 2 angezeigt wird, dann hat der Fahrer derzeit keine Möglichkeit, die eingeblendete Geschwindigkeitsbegrenzung zu verifizieren.

Ferner kann es für den Fahrer hilfreich sein, andere Schilder erneut betrachten zu wollen, z.B. Abbiegehinweise.

Erfindungsgemäß ist es daher vorgesehen, dass die Vorrichtung 1 derart ausgebildet ist, dass in der Umgebung aufgenommene Bilder B in Abhängigkeit von Ereignissen und von dafür relevanten Informationen gespeichert werden.

Insbesondere werden ereignisgesteuert zumindest die aufgenommenen digitalen Bilder Bd; eine zugehörige Erfassungszeit und zumindest als Fahrzeugparameter eine zugehörige momentane Position des Fahrzeugs F gespeichert, wobei die Speicherung der digitalen Bilder Bd in Abhängigkeit vom ermittelten Ereignis örtlich und/oder zeitlich begrenzt erfolgt und/oder wobei die gespeicherten digitalen Bilder Bd zumindest eines Ereignisses als Ausgabebild A auf der Anzeige 2 ausgegeben werden.

Hierzu wird beispielsweise zunächst eine Menge von Ereignissen definiert, die durch die Vorrichtung 1 aufgezeichnet werden können. Ein Ereignis kann beispielsweise das Erkennen eines Verkehrszeichens in der realen Umgebung U sein. Darüber hinaus sind beliebige andere Ereignisse denkbar, wie z.B. das Auftreten einer Warnmeldung im Fahrzeug F oder das Überfahren einer bestimmten geografischen Markierung.

Zu jedem Ereignis wird durch die Vorrichtung 1 die zugehörige Erfassung bestimmt, zu dem das Ereignis eintrat, und diese Erfassungszeit zusammen mit den dabei aufgenommenen Bildern B des Ereignisses gespeichert. Zusätzlich kann die geografische momentane Position des Fahrzeuges F zur Erfassungszeit des Ereignisses gespeichert werden.

Es ist offensichtlich, dass zusätzlich beliebige weitere Daten zu einem Ereignis gespeichert werden können, wie beispielsweise die Geschwindigkeit des Fahrzeuges F, aber auch Informationen über die Regenintensität oder die Lichtsituation.

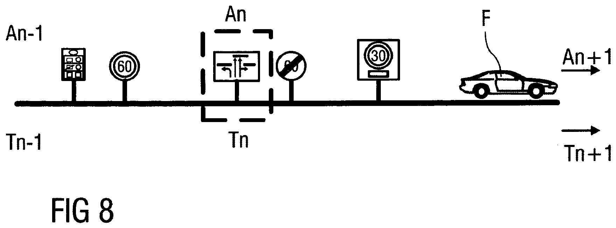

Figur 8 zeigt beispielhaft eine Ausgabebildsequenz An an mehreren Ausgabebildern A und somit ein Abbild einer visuellen Aufzeichnung der Umgebung U des Fahrzeugs F mittels einer der Aufnahmeeinheiten 3.

Die Vorrichtung 1 ist darüber hinaus derart ausgebildet, dass auf der Anzeige 2 mittels einer Bedieneinheit, insbesondere einer Sprach-, Bild- und/oder Tastensteuerung im Fahrzeug F die vorgegebenen Ereignisse in zeitlichen und örtlichen Bezug zueinander und zum aktuellen Zeitpunkt Tn gebracht werden können. Dies erleichtert es dem Fahrer, ein bestimmtes Ereignis auszuwählen.

Beispielsweise können die Ereignisse auf einer Navigationskarte dargestellt werden, um einen örtlichen Bezug zur Landschaft herzustellen. Weiterhin ist es denkbar, dass der Fahrer mit Hilfe einer Filterfunktion bestimmte Ereignisse ausfiltern kann. Ebenso ist es denkbar, dass der Fahrer über eine Suchfunktion nach bestimmten Ereignissen suchen kann.

In Figur 8 ist als Ereignis ein zum Zeitpunkt Tn in der Vergangenheit, d.h. vor einem Kilometer bzw. vor einer Minute und dreißig Sekunden, erfasstes und im vorangegangenen Ausgabebild An-1 eingeblendetes Kreuzungsschild vorgegeben. Bei einer Suche nach diesem vorgegebenen Ereignis wird mittels der Vorrichtung anhand der gespeicherten Daten das betreffende Objekt O1 bis Oz und/oder die Zusatzinformation Z1 bis Zx in der auf der Anzeige 2 ausgegebenen Ausgabebildsequenz An identifiziert und zur Kennzeichnung wird das Kreuzungsschild mit einer Markierung M für die Suche/Anwahl versehen.

Es sind weitere Ausgestaltungen der Erfindung möglich, in denen es eine zeitliche Begrenzung für die Aufzeichnung von digitalen Bildern Bd und Ereignissen gibt, so dass Bilder B und Ereignisse, die ein bestimmtes Alter erreicht haben, gelöscht werden. Es sind jedoch auch Ausgestaltungen möglich, in denen es keine zeitliche Begrenzung für die Aufzeichnung der digitalen Bilder Bd und Ereignisse gibt.

Weiterhin sind Ausgestaltungen möglich, in denen es eine örtliche Begrenzung für die Aufzeichnung von digitalen Bilder Bd in Bezug auf deren Ereignis gibt, so dass beispielsweise zu einem Ereignis zugeordnete und zu diesem gespeicherte digitale Bilder Bd nach einer bestimmten gefahrenen Strecke ab dem Ereignis gelöscht werden. Alternativ ist es möglich, dass die zu einem Ereignis aufgenommenen digitalen Bilder Bd ab einer bestimmten Entfernung des Fahrzeugs F vom Ort des Ereignisses gelöscht werden.

In einer Variante der Erfindung werden alle Ereignisse zusammen mit den gespeicherten Informationen, wie den aufgenommenen digitalen Bildern Bd, den Erfassungszeiten und/oder der ermittelten Fahrzeugpositionen, an einen zentralen Server (Backend-Server) übertragen und dort gespeichert. Der Zugriff auf die Ereignisse und die zugehörigen digitalen Bilder Bd und die daraus resultierenden Ausgabebilder A durch den Fahrer können dann z.B. dezentral über einen Remote-Zugriff, über eine Web-Seite oder eine Applikation (App) erfolgen.

Im Detail sieht das Verfahren vor, dass beim Eintreten eines bestimmten Ereignisses eine Aufzeichnung der Umgebung U vorgenommen wird, wobei die Aufzeichnung wenigstens die aktuelle Zeit (Erfassungszeit) oder die momentane geographische Position des Fahrzeugs F beim Eintreten des Ereignisses umfasst. Dabei erfolgt die Aufzeichnung derart, dass mindestens ein Standbild der Umgebung U des Fahrzeugs F zum Zeitpunkt des Ereignisses gespeichert wird.

Darüber hinaus können zusätzliche, das Ereignis kennzeichnende Informationen aufgezeichnet werden, z.B. erkannte Geschwindigkeitsbegrenzung, Position eines Verkehrsschildes im Umgebungsbild und somit im Ausgabebild A. Auch können zusätzliche, den Zustand des Fahrzeugs F zum Zeitpunkt des Ereignisses kennzeichnende Informationen, wie z.B. Geschwindigkeit des Fahrzeugs F, Spur des Fahrzeugs F, aufgezeichnet werden.

Eine Weiterbildung sieht vor, dass zusätzliche Metadaten zum Zeitpunkt des Ereignisses aufgezeichnet werden, welche für das Ereignis relevant sein können, z.B. Regenintensität, Lichtverhältnisse, Straßenverhältnisse.

Je nach Ausstattungsgrad des Fahrzeugs F kann zusätzlich zu den mittels Radar oder Kamera aufgenommenen digitalen Bildern Bd der Umgebung U mindestens ein Video der Umgebung U erfasst werden, welches den Zeitpunkt des Ereignisses abdeckt.

Zur Plausibilitätsprüfung können ferner ein oder mehrere Messwerte anderer Sensoren des Fahrzeugs F zur Umgebungserfassung während, vor oder nach dem Ereignis aufgezeichnet werden. So können beispielsweise "Radarstandbild", "Radarvideo", "Ultraschallstandbild", "Ultraschallvideo" ereignisgesteuert erfasst und gespeichert werden.

Die Erfindung ermöglicht es einem Insassen des Fahrzeugs F, ein vergangenes Ereignis und die dabei aufgenommenen digitalen Bilder Bd und erzeugten Ausgabebilder A auszuwählen. Anhand der Auswahl des Ereignisses kann dann mindestens eine der für das Ereignis aufgezeichneten Informationen, wie Ausgabebilder A mit und/oder ohne augmentierte Zusatzinformationen Z1 bis Zx auf der Anzeige 2 oder einem anderen geeigneten Ausgabemedium ausgegeben werden. Zusätzlich kann anhand der Auswahl des Ereignisses das für das Ereignis aufgezeichnete Standbild oder Video auf der Anzeige 2 angezeigt werden.

Dabei können bei einer interaktiv ausgebildeten Anzeige 2 innerhalb des Standbildes oder innerhalb des Videos Bildbereiche markiert werden, die für das entsprechende Ereignis relevant sind, z.B. Umrandung eines erkannten Verkehrszeichens.

Zusätzlich oder alternativ können die vorgegebenen Ereignisse auf der Anzeige 2 im Ausgabebild A für eine Ereignisauswahl textuell oder als Icons oder in einer Kombination beider Weisen dargestellt werden. Dabei können die Ereignisse für die Auswahl in einen zeitlichen, einen örtlichen oder einen zeitlichen und örtlichen Bezug zueinander gesetzt werden, wobei dieser Bezug grafisch oder textuell oder auf beide Weisen beispielsweise anhand von Pfeilen, Wolken, Gruppierungen, Barken, Balken, etc. visualisiert wird.

In einer möglichen, nicht näher dargestellten Art und Weise können die vorgegebenen Ereignisse für eine Auswahl auf einer Karte gruppiert oder einzeln dargestellt werden. Auch kann vorgesehen sein, dass bei Eintreten eines Ereignisses dem Fahrer eine Meldung angezeigt oder hörbar gemacht wird, wobei die Meldung für eine bestimmte Zeitperiode wahrnehmbar ist, und der Fahrer gegebenenfalls während dieser Zeitperiode die Möglichkeit hat, durch das Betätigen eines Bedienelementes oder durch das Ausführen eines Sprachkommandos oder durch das Ausführen einer Geste das Ereignis direkt anzuwählen. Auch ist es möglich durch die Anwahl des Ereignisses vergleichbare Aktionen auszuführen, wie sie zuvor beschrieben wurden.

Wie bereits oben anhand der Vorsprung-, Rückblickfunktion beschrieben, kann der Fahrer analog dazu während der Anzeige mehrerer Ereignisses anhand einer Bildersequenz durch das Betätigen eines Bedienelementes oder durch das Ausführen eines Sprachkommandos oder durch das Ausführen einer Geste die Anzeige 2 von den die Ereignisse repräsentierenden Ausgabebildern A vorwärts oder rückwärts laufen lassen, so dass bei Ausgabe das jeweilige Ereignis angewählt und angezeigt werden kann.

Ferner ist es mittels der Vorrichtung 1 möglich, gespeicherte Ereignisse und Ausgabebilder A und/oder aufgenommene digitale Bilder Bd der Ereignisse über eine geeignete Kommunikationsverbindung, vorteilhaft realisiert über eine im Fahrzeug F integrierte drahtlose Kommunikationseinrichtung, an einen zentralen Server zum Beispiel einer Werkstatt zu übertragen, wobei der Server die übertragenen Daten für ein bestimmtes Fahrzeug F zumindest für eine begrenzte Zeit speichert.

Die Erfindung und das Verfahren zur augmentierten Darstellung eignen sich zur Anwendung für ein mobiles Endgerät oder einen Desktop-PC, welche eine Verbindung zu einem Server herstellt und es einem Anwender ermöglicht, für ein bestimmtes Fahrzeug F die Ereignisse anzuzeigen, auszuwählen und die Daten hierzu anzuzeigen.

Um die zu gespeicherte Menge zu reduzieren, ist vorgesehen, dass ein Ereignis und die zugehörigen Daten, wie aufgenommene digitale Bilder Bd und Ausgabebilder A nach einer bestimmten Zeit seit dem Auftreten des Ereignisses gelöscht werden. Insbesondere wird ein Ereignis und dessen Daten gelöscht, sobald das Fahrzeug F eine bestimmte Strecke seit Eintreten des Ereignisses zurückgelegt hat, oder sobald das Fahrzeug F sich in einer bestimmten räumlichen Entfernung vom Ereignisort befindet.

Darüber hinaus kann das Verfahren zur ereignisgesteuerten Speicherung automatisch anhand eines mittels einer Fahrzeugsensorik aufgenommenen und identifizierten Ereignisses, z. B. erfasstes vorgegebenes Verkehrsschild, wie ein Stopp-Schild, das Erkennen einer Geschwindigkeitsbegrenzung, das Erkennen eines Abbiegehinweises, ausgelöst werden.

## Patentansprüche

1. Verfahren zur augmentierten Darstellung mindestens einer, einem Bild (Bd, Br) überlagerten Zusatzinformation (Z1 bis Zx), wobei das Bild (Bd, Br) ein digitales Bild (Bd) einer realen vorausliegenden Fahrzeugumgebung (U) oder ein im Sichtfeld eines Benutzers liegendes Bild (Br) einer realen Fahrzeugumgebung (U) ist, wobei das Bild (Bd, Br) einen Hintergrund (H(A), H(Br)) einer Ausgabeeinheit (2) bildet, wobei mehrere darzustellende Zusatzinformationen (Z1 bis Zx) zu mindestens einer Gruppe (G1 bis G3) zusammengefasst werden und als eine Gruppeninformation dem Bild (Bd, Br) überlagert ausgegeben werden wobei den Zusatzinformationen (Z1 bis Zx) reale Objekte (O1 bis Ox) zugehören,
**dadurch gekennzeichnet, dass**
darzustellende Zusatzinformationen (Z1 bis Z4), deren zugehörige reale Objekte (O1 bis O4) in der Fahrzeugumgebung (U) vorausliegen und aktuell nicht im dem Bild (Bd, Br) angezeigt werden sondern zukünftig anzuzeigen sind, in einer ersten Gruppe (G1) zusammengefasst und als erste Gruppeninformation zusammen mit aktuell darzustellenden Zusatzinformationen, deren zugehörige reale Objekte (O5 bis O8) momentan in der Fahrzeugumgebung (U) liegen und in dem Bild (Bd, Br) momentan angezeigt werden, ausgegeben werden.

2. Verfahren nach Anspruch 1,
**dadurch gekennzeichnet, dass**
aktuell darzustellende Zusatzinformationen (Z1 bis Zx), deren zugehörige reale Objekte (O5 bis O8) im Bild momentan angezeigt werden, in einer zweiten Gruppe (G2) zusammengefasst und als zweite Gruppeninformation ausgegeben werden.

3. Verfahren nach einem der vorhergehenden Ansprüche,
**dadurch gekennzeichnet, dass**
vorangegangene Zusatzinformationen (Z1 bis Zx), deren zugehörige reale Objekte (O9 bis O12) in der realen Fahrzeugumgebung (U) zurückliegen und in der Vergangenheit kürzlich sichtbar waren in einer dritten Gruppe (G3) zusammengefasst und als dritte Gruppeninformation ausgegeben werden.

4. Verfahren nach einem der vorhergehenden Ansprüche,
**dadurch gekennzeichnet, dass**
mehrere darzustellende Zusatzinformationen (Z1 bis Zx) derart als eine Gruppeninformation ausgegeben werden, dass die einzelnen Zusatzinformationen (Z1 bis Zx) übereinander teilweise oder vollständig verdeckend und/oder nebeneinander ausgegeben werden.

5. Verfahren nach einem der vorhergehenden Ansprüche,
**dadurch gekennzeichnet, dass**
die Zusatzinformationen (Z1 bis Zx) mindestens einer Gruppe (G1 bis G3) sortiert nach deren Entfernungen zur Position eines Betrachters der Anzeige (2), insbesondere zur Position des eigenen Fahrzeugs (F), und/oder nach der zugehörigen Anzeigedauer im Hintergrund (H(A), H(Br)) der Ausgabeeinheit (2) zusammengefasst und als betreffende Gruppeninformation ausgegeben werden.

6. Verfahren nach einem der vorhergehenden Ansprüche,
**dadurch gekennzeichnet, dass**
die dem Bild (Bd, Br) überlagert ausgegebene Zusatzinformation (Z1 bis Zx) manuell mittels mindestens einer Auswahlfunktion manipuliert und deren Ausgabe entsprechend verändert oder angepasst wird.

7. Vorrichtung zur Durchführung eines Verfahrens zur augmentierten Darstellung einer einem digitalen Bild (Bd) einer Fahrzeugumgebung (U) überlagerten Zusatzinformation (Z1 bis Zx), umfassend:
- mindestens eine Aufnahmeeinheit (3) zur Aufnahme oder Erfassung des digitalen Bildes (Bd) der Fahrzeugumgebung (U),
wobei das digitale Bild (Bd) einen Hintergrund (H(A)) auf einer Ausgabeeinheit (2) der Vorrichtung bildet,
- mindestens eine Verarbeitungseinheit (4) zur grafischen Verarbeitung des aufgenommenen digitalen Bildes (Bd) und Transformation des digitalen Bildes (Bd) in ein den Hintergrund (H(A)) bildendes Ausgabebild (A) der Ausgabeeinheit (2) sowie zur Erzeugung einer dem digitalen Bild (Bd) überlagerten Zusatzinformation (Z1 bis Zx) wobei
die Ausgabeeinheit (2) zur Ausgabe der dem digitalen Bild (Bd) überlagerten Zusatzinformation (Z1 bis Zx) eingerichtet ist, wobei mehrere darzustellende Zusatzinformationen (Z1 bis Zx) zu mindestens einer Gruppe (G1 bis G3) zusammengefasst werden und als eine Gruppeninformation dem Bild (Bd) überlagert ausgegeben werden,
wobei den Zusatzinformationen (Z1 bis Zx) reale Objekte (O1 bis Ox) zugehören,
**dadurch gekennzeichnet, dass**
darzustellende
Zusatzinformationen (Z1 bis Z4), deren zugehörige reale Objekte (O1 bis O4) in der Fahrzeugumgebung (U) vorausliegen und aktuell nicht im digitalen Bild (Bd) angezeigt werden sondern zukünftig anzuzeigen sind, in einer ersten Gruppe (G1) zusammengefasst und als erste Gruppeninformation zusammen mit aktuell darzustellenden Zusatzinformationen, deren zugehörige reale Objekte (O5 bis O8) momentan in der Fahrzeugumgebung (U) liegen und aktuell im digitalen Bild (Bd) angezeigt werden, ausgegeben werden.

## Claims

1. Method for the augmented display of at least one additional information (Z1 to Zx) superimposed on an image (Bd, Br), wherein the image (Bd, Br) is a digital image (Bd) of a real vehicle environment (U) lying ahead or an image (Br) of a real vehicle environment (U) lying in the field of view of a user, wherein the image (Bd, Br) forms a background (H(A), H(Br)) of an output unit (2), wherein several items of additional information (Z1 to Zx) to be displayed are combined into at least one group (G1 to G3) and output as a group information superimposed on the image (Bd, Br), wherein real objects (O1 to Ox) belong to the items of additional information (Z1 to Zx),
**characterised in that**
items of additional information (Z1 to Z4) to be displayed, the associated real objects (O1 to O4) of which lie ahead in the vehicle environment (U) and are currently not displayed in the image (Bd, Br) but are to be displayed in the future, are combined in a first group (G1) and output as first group information together with currently to be displayed items of additional information, the associated real objects (O5 to O8) of which currently lie in the vehicle environment (U) and are currently displayed in the image (Bd, Br).

2. Method according to claim 1,
**characterised in that**
items of additional information (Z1 to Zx) to be displayed currently, the associated real objects (O5 to O8) of which are currently displayed in the image, are combined in a second group (G2) and output as second group information.

3. Method according to any of the preceding claims,
**characterised in that**
previous items of additional information (Z1 to Zx), the associated real objects (O9 to 012) of which lie back in the real vehicle environment (U) and were visible for a short time in the past, are combined in a third group (G3) and output as third group information.

4. Method according to any of the preceding claims,
**characterised in that**
several items of additional information (Z1 to Zx) to be displayed are output as group information in such a way that the individual items of additional information (Z1 to Zx) are output on top of one another in a partially or completely concealing manner and/or adjacent to one another.

5. Method according to any of the preceding claims,
**characterised in that**
the items of additional information (Z1 to Zx) of at least one group (G1 to G3) are sorted in accordance with their distance from the position of a viewer of the display (2), in particular from the position of the own vehicle (F), and/or combined in accordance with the associated display duration in the background (H(A), H(Br)) of the display unit (2) and output as the respective group information.

6. Method according to any of the preceding claims,
**characterised in that**
the additional information (Z1 to Zx) output in the image (Bd, Br) in a superimposed manner is manipulated manually by means of at least one selection function and its output is changed or adapted accordingly.

7. Device for the execution of a method for the augmented display of an additional information (Z1 to Zx) superimposed on a digital image (Bd) of a vehicle environment (U), comprising:
- at least one recording unit (3) for recording or detecting the digital image (Bd) of the vehicle environment (U), wherein the digital image (Bd) forms a background (H(A)) on an output unit (2) of the device,
- at least one processing unit (4) for the graphic processing of the recorded digital image (Bd) and the transformation of the digital image (Bd) into an output image (A) of the output unit (2) which forms the background (H(A)), and for the generation of an additional information (Z1 to Zx) superimposed on the digital image (Bd), wherein the output unit (2) is equipped to output the additional information (Z1 to Zx) superimposed on the digital image (Bd), wherein several items of additional information (Z1 to Zx) to be displayed are combined into at least one group (G1 to G3) and output as a group information superimposed on the image (Bd), wherein real objects (O1 to Ox) belong to the items of additional information (Z1 to Zx),
**characterised in that**
items of additional information (Z1 to Z4) to be displayed, the associated real objects (O1 to O4) of which lie ahead in the vehicle environment (U) and are currently not displayed in the image (Bd) but are to be displayed in the future, are combined in a first group (G1) and output as first group information together with currently to be displayed items of additional information, the associated real objects (O5 to O8) of which currently lie in the vehicle environment (U) and are currently displayed in the digital image (Bd).

## Revendications

1. Procédé d'augmentation de la représentation d'au moins une information supplémentaire (Z1 à Zx) chevauchant une image (Bd, Br), l'image (Bd, Br) étant une image numérique (Bd) d'un environnement de véhicule réel (U) à venir ou d'une image (Br) se trouvant dans le champ de vision d'un utilisateur d'un environnement de véhicule réel (U), l'image (Bd, Br) formant un arrière-plan ((H(A), H(Br)) d'une unité de sortie (2), plusieurs informations supplémentaires (Z& à Zx) à représenter étant regroupées au moins en un groupe (G1 à G3) et délivrées en chevauchant l'image (Bd, Br) en tant qu'une information de groupe, les informations supplémentaires étant (Z1 à Zx) associées à des objets réels (O1 à OX), **caractérisé en ce que** les informations supplémentaires à représenter (Z1 à Z4), dont les objets associés (O1 à O4) se trouvant à venir dans l'environnement du véhicule (U) et qui actuellement ne sont pas affichés dans l'image (Bd, Br) mais qui doivent être affichées à l'avenir, sont regroupées dans un premier groupe (G1) et sont délivrées en tant qu'informations de premier groupe conjointement avec des informations supplémentaires à représenter actuellement dont les objets associés (O5 à O8) se trouvent momentanément dans l'environnement de véhicule (U) et affichés momentanément dans l'image (Bd, Br).

2. Procédé selon la revendication 1, **caractérisé en ce que** les informations supplémentaires (Z1 à ZX) à représenter actuellement dont les objets réels associés (O5 à O8) sont affichés momentanément dans l'image, sont regroupés dans un second groupe et sont délivrés en tant qu'informations de second groupe.

3. Procédé selon l'une quelconque des revendications précédentes, **caractérisé en ce que** les informations supplémentaires précédentes (Z1 à ZX) dont les objets réels associés (O9 à O12) sont situés derrière dans l'environnement de véhicule réel (U) et qui étaient visibles dans le passé sont regroupés dans un troisième groupe (G3) et sont délivrées en tant qu'informations de troisièmes groupe.

4. Procédé selon l'une quelconque des revendications précédentes, **caractérisé en ce que** plusieurs informations supplémentaires (Z1 à ZX) à représenter sont délivrées en tant qu'information de groupe de telle sorte que les informations supplémentaires (Z1 à Zx) individuelles sont délivrées, se chevauchant les unes les autres en partie ou complètement et/ou les unes à côté des autres.

5. Procédé selon l'une quelconque des revendications précédentes, **caractérisé en ce que** les informations supplémentaires (Z1 à Zx) d'au moins un groupe (G1 à G3) sont délivrées, triées selon leur éloignement par rapport à la position d'un observateur de l'affichage (2), en particulier par rapport à la position du conducteur lui-même (F) et/ou sont regroupées selon la durée d'affichage correspondante en arrière-plan (H(A), H(Br)) de l'unité de sortie (2) et délivrés en tant qu'informations de groupe correspondantes.

6. Procédé selon l'une quelconque des revendications précédentes, **caractérisé en ce que** les informations supplémentaires (Z1 à Zx) délivrées en chevauchant l'image (Bd, Br) peuvent être manipulées manuellement au moins à l'aide d'une fonction de sélection et leur sortie peut être modifiée ou adaptée en conséquence.

7. Dispositif destiné à exécuter un procédé de représentation augmentée d'une image numérique (Bd) d'une information supplémentaire (Z1 à Zx) chevauchant un environnement de véhicule (U), comprenant :
- au moins une unité d'enregistrement (3) destiné à enregistrer ou à détecter l'image numérique (Bd) de l'environnement de véhicule (U), l'image numérique (Bd) formant un arrière-plan (H(A)) sur une unité de sortie (2) du dispositif,
- au moins une unité de traitement (4) destiné à réaliser un traitement graphique sur l'image numérique enregistrée (Bd) et destiné à transformer l'image numérique (Bd) en une image de sortie (A) formée dans un arrière-plan (H(A)) de l'unité de sortie (2) et à générer une information supplémentaire (Z1 à Zx) chevauchant l'image numérique (Bd), l'unité de sortie (2) étant conçue pour sortir l'information supplémentaire (Z1 à Zx) chevauchant l'image numérique (Bd), plusieurs informations supplémentaires (Z1 à Zx) à représenter étant regroupés au moins dans un groupe (G1 à G3) et sorties en tant qu'une information de groupe, en chevauchant l'image (Bd), les informations supplémentaires (Z1 à Zx) étant associées aux objets réels (O1 à Ox), **caractérisé en ce que** les informations supplémentaires (Z1 à Z4) à représenter, dont les objets réels associés (O1 à O4) se trouvant à venir dans l'environnement de véhicule (U) et ne sont pas actuellement affichées dans l'image numérique (Bd) mais seront affichées à l'avenir, sont regroupées dans un premier groupe (G1) et sont affichées ensemble avec les informations à représenter actuellement dont les objets réels associés (O5 à O8) se trouvent momentanément dans l'environnement de véhicule (U) et actuellement affichées dans l'image numérique (Bd).
